# EUROPEAN PATENT APPLICATION

(11) **EP 2 390 709 A1**
(43) Date of publication of application: **30.11.2011**
(21) Application number: 10163924.3
(22) Date of filing: 26.05.2010
(51) Int. Cl.: G02B 27/64, G01C 21/26

(54) **Display system with fixed screen image**

(71) Applicant: Harman Becker Automotive Systems GmbH, 76307 Karlsbad (DE)
(72) Inventor: Huenig, Daniel, 72074, Tuebingen (DE)
(74) Representative: Bertsch, Florian Oliver

(57) **Abstract**

The present invention relates to a display system (100) comprising:
- a display unit (110) displaying a screen image (200),
- an acceleration sensor (130) determining a direction information of a movement of the display unit,
- a display driver (120) controlling the displaying of the screen image (200) on the display unit, wherein the display driver (120) receiving the direction information of the movement of the display unit controls the displaying of the screen image (200) in such a way that the movement of the display unit (110) is at least partly compensated by a compensation movement of the screen image (200) in which the display driver moves the screen image (200) displayed in the display unit in a direction opposite to the determined direction of the moved display unit (110).

## Description

The present invention relates to a display system with a display unit displaying a screen image and to a method for displaying the screen image on the display unit.

### Related Art

Mobile devices, such as portable navigation systems, are known which are attached by a user to the vehicle compartment, e.g. the windscreen. When the vehicle is driving on a bumpy road, the mobile device is shaken together with the vehicle.

Furthermore, portable hand held devices, such as smart phones, are known which may be used in an environment where the user and or the portable device are exposed to vibrations. When the display of the portable device or of the navigation system is exposed to vibrations, the user of the device/system can have difficulties to correctly identify the information shown on the display, i.e. the vibrations deteriorate the visibility and the legibility of the information shown on the display.

### Summary

Accordingly, a need exists to provide a display system that reduces the impact of vibrations on the displayed content. This need is met by the features of the independent claims. In the dependent claims preferred embodiments of the invention are described.

According to the invention, a display system is provided comprising a display unit displaying a screen image. Furthermore, an acceleration sensor is provided in the display system determining a direction information of a movement of the display unit. A display driver that is controlling the displaying of the screen image on the display unit receives the direction information from the acceleration sensor and controls the displaying of the screen image in such a way that the movement of the display unit is at least partly compensated by a compensation movement of the screen image in which the display driver moves the screen image displayed in the display unit in a direction opposite to the determined direction of the moved display unit. When the display unit is moved in one direction and when the screen image shown on the display unit is moved in the other direction by the compensation movement a stabilized screen image is obtained. The screen image remains more or less a fixed screen image and the display unit appears like a frame that is moving over the fixed screen image. The user looking at the screen image on the display unit can better identify the displayed content, as the movements of the user's head are slower than the movements of the display unit. Thus, in a first approximation the user's head is in a fixed position, and by the compensation movement of the screen image the screen image is also held in a substantially fixed position.

Preferably, the display driver compensates the movement of the display unit in such a way that the displayed screen image substantially remains in a fixed position relative to a fixed reference frame. By way of example, the reference frame could be the earth or any other fixed frame which does not move or moves less than the display system.

Preferably, the acceleration sensor is configured so as to detect whether the display unit is moved back in a direction opposite to the determined direction within a predetermined period of time after the movement of the display unit. If the acceleration sensor does not detect that the display unit is moved back within said predetermined period of time, the display driver controls the screen image in such way that the compensation movement of the screen is reversed resulting in a screen image that corresponds to the screen image before the compensation movement has been carried out. If the display unit is not moved back near its original position, the display driver shall smoothly pan the screen image back to its original position. This helps to eliminate sudden and fast movements of the displayed data that could irritate the viewer or hamper the perception of the displayed information. In this embodiment of the invention the display driver is configured so as to reverse the compensation movement. In another embodiment of the invention, described in further detail below, the compensation movement will not be reversed.

The acceleration sensor is preferably configured to determine the direction and the extent of the movement of the display unit and the display driver receiving this information initiates the compensation movement in dependence on the direction in extent of the movement. If the screen image is more or less a fixed screen image, then the more the display unit is moved, the more the position of the screen image has to be compensated.

In a preferred embodiment of the invention, the screen image is larger than the display unit and comprises displayed parts of the screen image and non-displayed of the screen image. The non-displayed parts of the screen image lie outside the region of the screen image visible on the display unit. In a compensation movement the display driver changes the displayed screen image in such way that a first section of the non-displayed parts of the screen image located on the screen next to an edge of the display unit that is opposite to the determined direction of the movement becomes part of the displayed part of the screen image and that a second section of the displayed part of the screen image located on the screen image next to an edge of the display unit which is located in the determined direction of the moved display becomes part of the non-displayed parts of the screen image. Thus, the screen image is larger than the physical display unit. When the display unit/ display system undergoes vibrations, the content of the screen image is changed on the edges by displaying non-displayed parts in dependence on the movement carried out by the display unit. In this embodiment the user has the impression that the display unit is a frame moving across a fixed picture, the screen image. This is especially beneficial when the screen image shows a geographical map. In this context the displayed parts of the screen image show a specified region on the geographical map, the non-displayed parts of the geographical map representing a non-displayed region of the map. In this embodiment the first section becomes a part of the displayed part of the geographical map and the second section becomes a non-displayed part of the geographical map. In this embodiment the display driver may be configured such that the compensation movement is not reversed allowing the user to display different parts of a geographical map simply by moving the display system with the display unit in the desired direction. The use of a larger screen image is not limited to geographical maps. It can be used in connection with any information displayed as screen image, be it a web page of the world wide web or a movie or any other content. The display driver is also configured to generate a virtual screen image from the received screen image information allowing to generate the screen image that is larger than the physical display unit. With this virtual screen image the compensation movement can be carried out without the need to display sections on the display unit without information as it would be the case if the screen image had the same size as the display unit.

In another embodiment of the invention the screen image has substantially the same size as the display unit. When the screen image is moved in the direction opposite to the determined direction of the moved display unit, the display driver may change the display screen image in such way that a section of the screen image next to an edge of the screen image which is opposite to the determined direction of the moved display unit is displayed with a uniform colour hue, whereas another section of the screen image located on the screen image next to the edge of the screen image is located in the direction of the moved display becomes a non-displayed part of the screen image. The display system can be incorporated into a portable device or a portable computer or may be used in a portable or fixedly installed navigation system. When used in a vehicle including bicycles or motorbikes and when the display is attached to the vehicle, the user may also undergo the same vibrations as the display. However, the user normally undergoes less vibrations than the display unit, so that a first approximation the viewer can be considered as being a fixed frame relative to the moving display unit.

In the embodiments described above, the acceleration sensor mainly compensates the movements of a display unit in a plane parallel to the screen image. In another embodiment the acceleration sensor is also configured to determine a movement of the display unit in a direction perpendicular to the plane defined by the screen image. In this embodiment the display driver may change a scale of the displayed screen image in dependence on the depicted movement perpendicular to the plane of the screen image. By way of example if the display system is moved closer to the user, the scale may be enlarged so that the screen image is shown in an enlarged scale showing further details. This may be helpful for displaying maps or circuit diagrams. If the display system is moved away from the user, the screen image may be shown in a smaller scale. In the case of a map this means that a larger part of the map is shown.

Furthermore, an enabling or disabling element may be provided that enables or disables the compensation movement of the screen image. This enabling/disabling element may be a simple button provided on the display system, e.g. an actuating device, or may be part of a menu structure in a menu to be shown on the display, and if the enabling/disabling element is enabled, the compensation movement is carried out in dependence on the detected movement of the screen image, whereas if the enabling/disabling element is in the disabled state, the displayed content does not depend on the movement of the display unit.

The display system may further be configured to detect an angular momentum of the display unit. In this embodiment if a rotational movement of the display unit is detected, the display driver may initiate a rotational compensation movement of the screen image in the opposite direction. This compensation of a rotational movement may be helpful when the display system is attached to a bicycle or motorvehicle. If a rotational compensation movement is carried out, the image for the user does not move together with the moving handle bar, but seems to be attached to the frame.

In the above-discussed example a main field of the application is a map. However, the present application is not restricted to a geographical map. It can also be used in connection with other screen images, e.g. a microscopic image, where a small portion of a larger object is shown. Furthermore, the invention can be applied in connection with circuit diagrams or constructional drawings.

If the compensation movement is not reversed, the rotational movement of the display unit can also be helpful to display three-dimensional models. By a movement of the display unit in any of the three directions and by determining the rotational movement in any of the possible three rotational directions of the display, a three-dimensional object shown in the image could be viewed by different angles using the compensation movement.

The invention further relates to a method for displaying the screen image on the display unit, wherein the direction information of the movement of the display unit is determined and the displaying of the screen image on the display unit is controlled in such a way that the movement of the display unit is at least partly compensated by a compensation movement in which the screen image displayed in the display unit is moved in a direction opposite to the determined direction of the moved display unit.

As discussed above, the controlling of the displayed screen image can be such that it is detected whether the display unit is moved back in a direction opposite to the determined direction and, if this is not the case, the compensation movement is reversed, resulting in a screen image corresponding to the screen image as displayed before the compensation movement. In the other embodiment the compensation movement is not reversed. This embodiment is especially advantageous, but not limited to screen images of a geographical map where the display unit can be used to move across the map. However, in case the map is used in a navigation system, e.g. in a portable or fixedly stalled navigation system in the vehicle, the compensation movement may be reversed.

### Brief Description of the Drawings

The invention will be discussed in further detail below with reference to the accompanying drawings, in which
Fig. 1 shows a schematic view of a display system according to the invention,
Fig. 2 shows a more detailed view of a display system moved in one direction with the compensation movement of the screen image,
Fig. 3 shows a flow chart comprising the steps for one embodiment of the compensation movement,
Fig. 4 shows the use of a display system with a screen image larger than the display unit in which it is possible to scroll over the screen image by moving the display system,
Fig. 5 shows the corresponding flow chart for the embodiment of Fig. 4,
Fig. 6 shows a change of scale of the screen image for a movement perpendicular to an image plane determined by the screen image, and
Fig. 7 shows an embodiment where a rotational movement of the display unit is compensated.

### Detailed Description

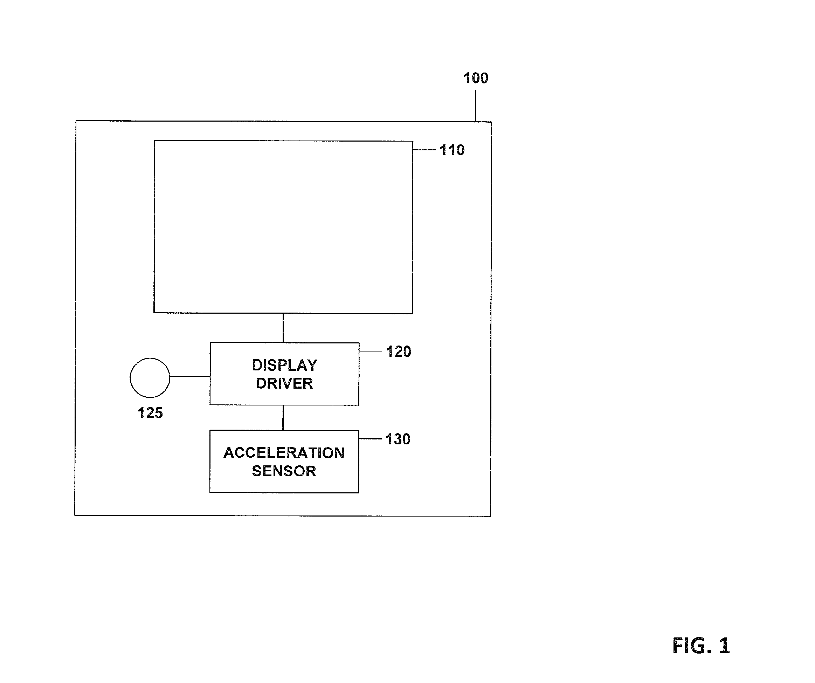

In Fig. 1 a display system 100 is shown which could be a PND or any other viewing device. The system 100 could be a smart phone or a portable navigation device or a portable computer, the system comprising a display unit 110 used to display information, a display driver 120 controlling the displaying of the information on the display unit 110. Additionally, an acceleration sensor 130, such as a gyroscope, is provided that is measuring the acceleration and determines the amount and direction of a movement of the display system 100. The system furthermore comprises an enabling/disabling element in the form of a button, by which the compensation of movements of the display unit by a compensation movement can be activated or deactivated.

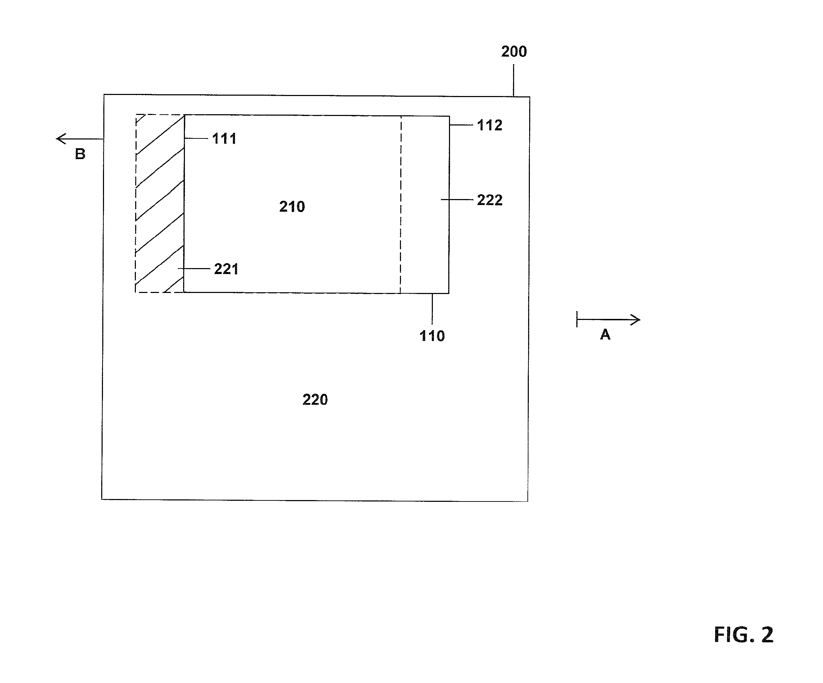

In Fig. 2 it is shown in more detail how the visibility and the legibility of the displayed data can be improved when the system undergoes vibrations or fast movements. In the embodiment shown in Fig. 2 the screen image 200 shown on the display unit 110 is larger than the display unit 110 itself. The display driver may generate the screen image to be displayed to be virtually larger than the physical display unit or the display unit shows a section of the screen image, e.g. in the case of a geographical map. When the system 100 is shaken or moved into a direction, the acceleration sensor 130 measures the direction and extent of the movement. By these data the display driver 120 is trigger to pan the displayed section of the virtual image in the opposite direction so that the border of the display appears like a frame moved across a fixed picture. In the embodiment shown in Fig. 2 a compensation movement is explained under the condition that the display system including the display unit 110 is moved to the right as shown by the arrow A. The acceleration sensor detects this movement and controls the displayed screen image in the following way. Before the movement the display unit displays a visible part of the screen image inside the display unit 110, the screen image 220 containing a displayed region 210 shown in the display unit and non-displayed parts or a non-displayed region 220 outside the frame of the display unit. If the display system is moved to the right, the display driver triggers a compensation movement by displaying a screen image corresponding to a screen image that would be displayed if the screen image was moved to the left in comparison to the moving display unit. A first section 221 of the non-displayed parts of the screen image becomes a displayed part and is shown in the display unit, whereas a section 222 shown in the display unit next to an edge 112 of the display unit that is located in the direction of the movement becomes a non-displayed part of the screen image. Thus, if the display system is moved to the right, the left edge 111 of the display unit appears to move to the left, whereas the right edge of the display unit 112 appears to move to the left by the same amount. However, it should be clear that the screen image is moved relative to the display unit, so that the screen image is shown on the display unit that is symbolized by the dashed lines.

If the display system is not moved back in its original position, the display driver shall smoothly pan the screen image back to its original centre position.

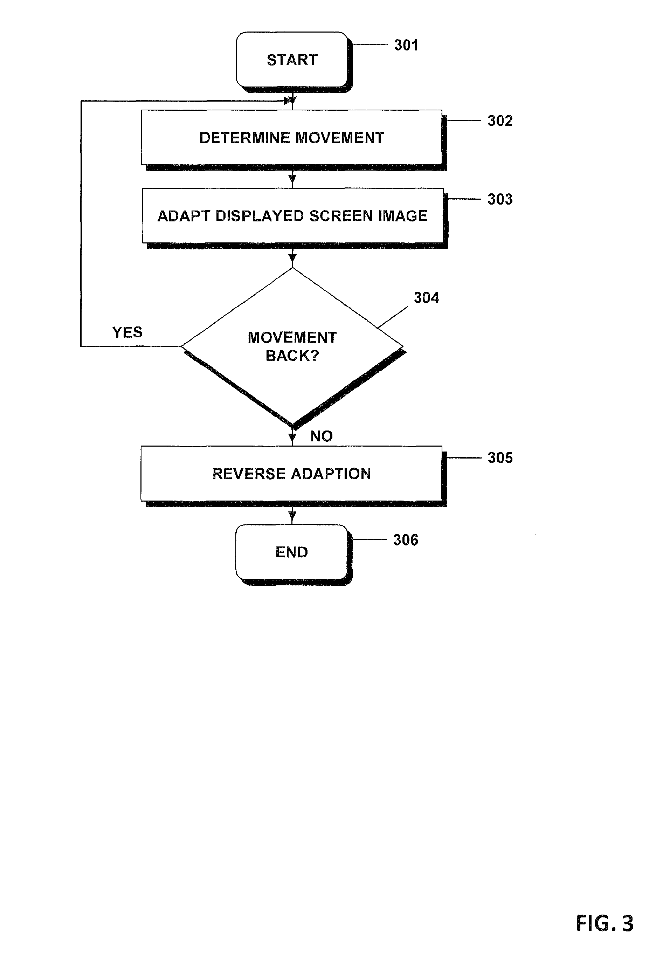

In Fig. 3 the embodiment shown in Fig. 2 is summarized. The method starts in step 301. In step 302 the movement of the display system is determined and in a next step 303 the screen image shown on the display unit is adapted accordingly, by moving the screen image in the opposite direction as symbolized by arrow B in Fig. 2. In step 304 it is asked whether a movement back is detected by the acceleration sensor within a predetermined time after the movement of step 302. If no movement back is detected, the compensation movement can be slowly reversed by moving back the screen image to the original position (step 305). If it is determined in step 304 that a movement is carried out, the method then returns to step 302 determining the movement and adapting the screen image accordingly in step 303. The method ends on step 306.

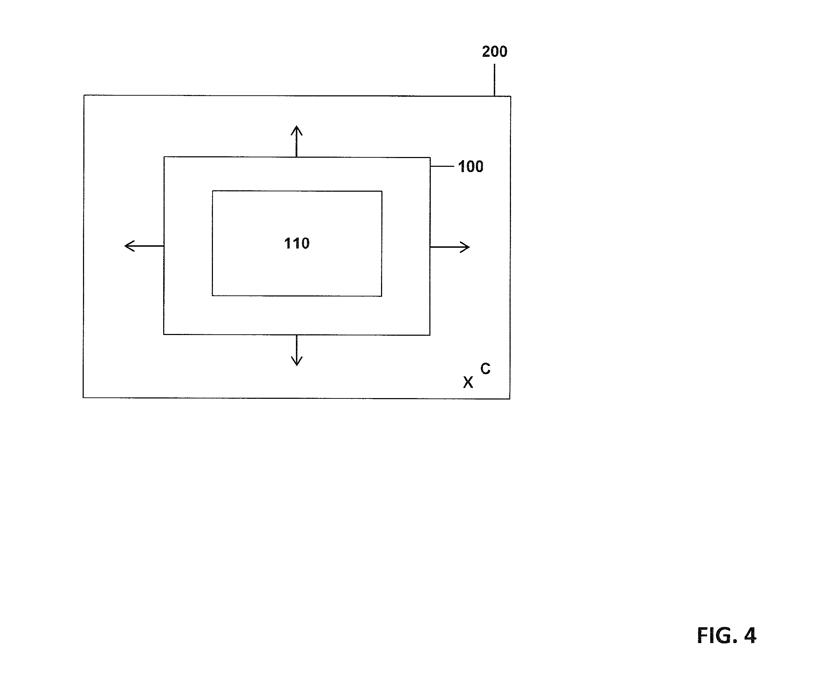

In Fig. 4 another embodiment is shown in which no reverse adaptation is carried out. This embodiment may be especially helpful when the screen image is a large geographical map and the user of a handheld device comprising a display system wants to have a more detailed view of some geographical areas of the map. The display system 100 having a display unit 110 as discussed in connection with Fig. 1 is provided. However, the display driver of the embodiment shown in Fig. 4 does not work as explained in connection with Fig. 3, as no reverse adaptation is carried out. Thus, if a movement of the display system in one direction is carried out, the screen image is moved in the opposite direction. As no reverse adaptation is carried out, the screen image is not moved back but stays at the position. As indicated by the four arrows shown in Fig. 4, such an embodiment can be used to move across a geographical map which is the large screen image 200. By simply moving the display system 100 in one direction, a part of the map can be displayed on the display unit that is lying in the direction of the movement by moving the screen image shown in the display unit in the opposite direction.

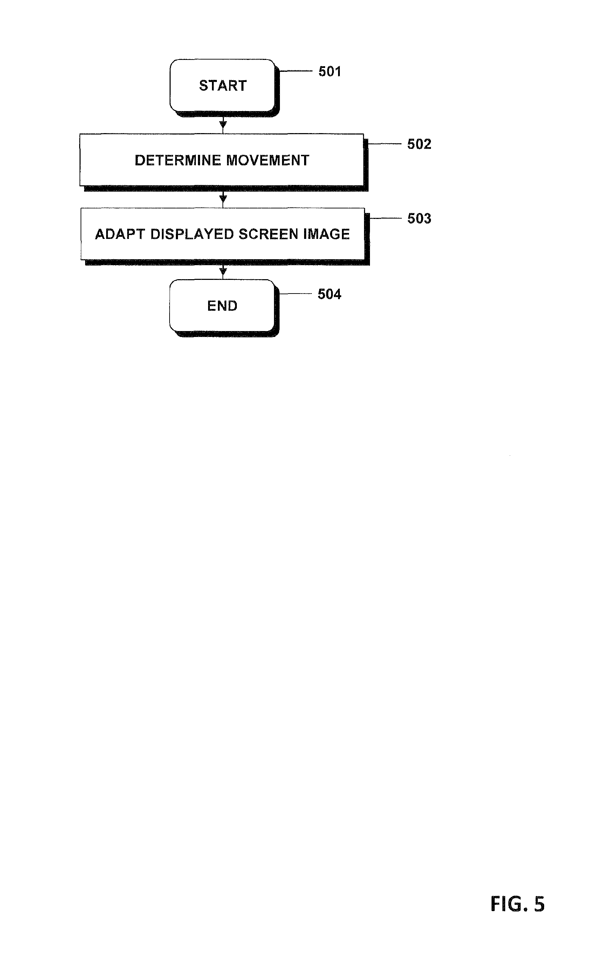

A method showing the steps needed to carry out the embodiment shown in Fig. 4 is discussed in connection with Fig. 5. The method starts in step 501 and the movement of the display system is determined in step 502, the screen imaged being adapted accordingly in step 503. As no reverse adaptation is carried out, the method directly ends in step 504. This is shown in the following example:
The user wants to look to a part of the map located next to location C shown in Fig. 4, the display unit currently displaying a part of the map represented by the display unit 110 as shown. By shortly moving the display unit to the right and down, the display unit will display as screen image part of the map located next to location C. Instead of a two-step movement to the right and down, also a single-step diagonal movement of the display unit in direction to location C may be carried out.

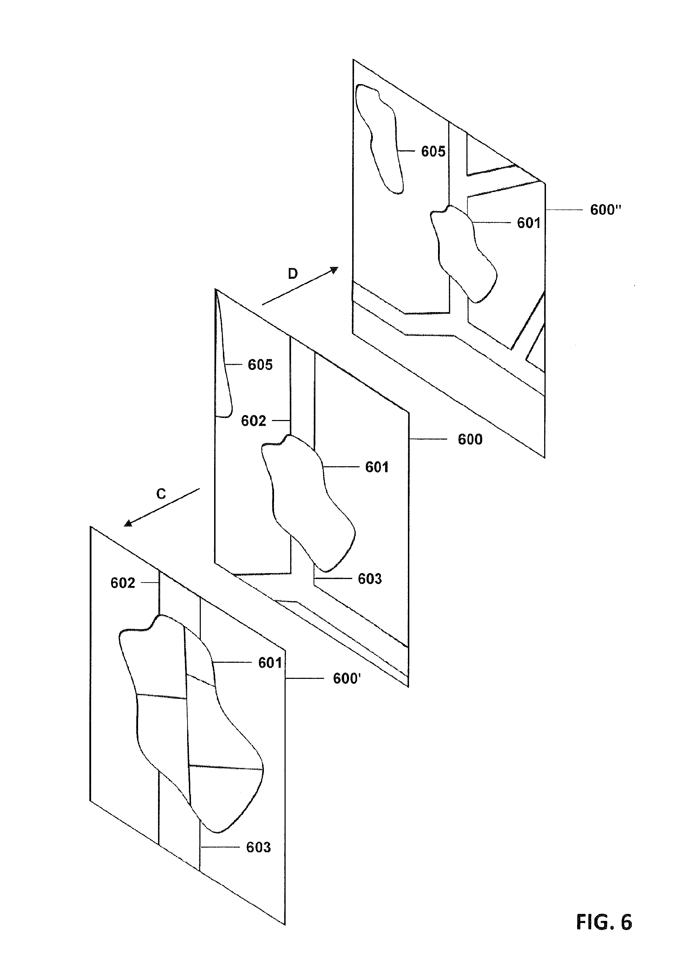

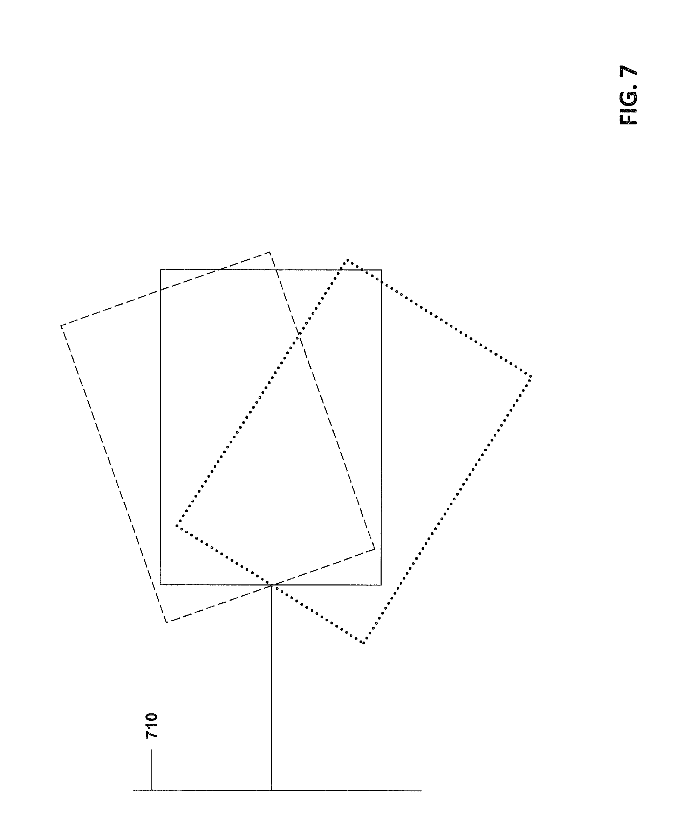

In connection with Figs. 6 and 7 other embodiments of the invention are shown. In the above-disclosed examples a movement of the display unit in the image plane determined by the screen image was detected and compensated. In the example shown in Fig. 6 a movement of the display unit perpendicular to the plane of the screen image is detected and used to change the scale of the displayed screen image. This application may be especially helpful for the display of geographical maps, the display of microscopic images, of circuit diagrams or constructional drawings. The display, in the example shown, shows a certain region of the map as indicated by the screen image 600. By way of example on the shown map an urban agglomeration 601 is shown together with highways 602 and 603 in the northern and southern part of the urban agglomeration. Situated at the western edge of the urban agglomeration part of a lake 605 is shown in the displayed screen image using a certain scale. If the user wants to have a more detailed view of a part of the map, a user can zoom in to the map, e.g. by moving the display unit in the direction of arrow C closer to himself or herself. The map is then shown in a screen image 600' in a larger scale with a better view of the urban agglomeration 601 and highway 602 and 603.

If an overview of a larger geographical region is needed, the user may move the display unit away from himself/herself in the direction as indicated by arrow D, resulting in a screen image 602', where a larger part of the map is shown now with the complete lake 605 and additional parts of the highway.

In connection with Fig. 7 another embodiment is shown in which an acceleration sensor detects the rotational movement of the display unit by determining the angular momentum applied to the display unit. In the embodiment of Fig. 7 the display units laterally attached to a support structure 710 which may be exposed to vibrations. As a consequence, the display unit may rotate. In order to avoid that the displayed content on the screen image rotates together with the rotating display, the acceleration sensor determining the amount and direction of rotational movement may provide this information to the display driver which can then compensate this rotational movement by a rotational compensation movement, so that the shown content appears to be fixed and does not rotate with the rotating display unit. In the embodiment shown in Fig. 7 the center of rotation is the fixing point of the display unit to the support structure 710. In another embodiment the center of rotation may be provided at the center of the display unit, e.g. when the display system is connected to a handle bar of a motorbike or bicycle. Here the compensation movement may be such that the displayed screen image seems to be fixed relative to the frame of the bicycle, the displayed content being independent from the movement of the handle bar, as the rotation of the screen image induced by a rotating handle bar is compensated by a compensation movement indicated by the display driver in which a rotation in the opposite direction around the same axis of rotation is initiated.

Summarizing, the present invention allows a better perception of information displayed by a display, as the impact of vibrations on the displayed content can be deduced.

## Claims

1. A display system (100) comprising:
- a display unit (110) displaying a screen image (200),
- an acceleration sensor (130) determining a direction information of a movement of the display unit,
- a display driver (120) controlling the displaying of the screen image (200) on the display unit, wherein the display driver (120) receiving the direction information of the movement of the display unit controls the displaying of the screen image (200) in such a way that the movement of the display unit (110) is at least partly compensated by a compensation movement of the screen image (200) in which the display driver moves the screen image (200) displayed in the display unit in a direction opposite to the determined direction of the moved display unit (110).

2. The display system (100) according to claim 1, wherein the display driver (120) compensates the movement of the display unit such that the displayed screen image substantially remains in a fixed position relative to a fixed reference frame.

3. The display system (100) according to any of the preceding claims, wherein the acceleration sensor (130) is configured so as to detect whether the display unit is moved back a direction opposite to the determined direction within a predetermined period of time, wherein if the acceleration sensor (130) does not detect that the display unit is moved back within said predetermined period of time, the display driver (120) controls the screen image in such a way that the compensation movement of the screen image is reversed so that the screen image as displayed before the compensation movement is displayed.

4. The display system (100) according to any of the preceding claims, wherein the acceleration sensor (130) is configured to determine the direction and the extend of the movement of the display unit, the display driver (120) initiating the compensation movement in dependence on the direction and extend of the movement.

5. The display system according to any of the preceding claims, wherein the screen image (200) is larger than the display unit (110) and comprises displayed parts of the screen image and non displayed parts of the screen image, the non displayed parts being outside the region of the screen image visible on the display unit, wherein the display driver (120) changes the displayed screen image (200) in such a way that a first section (221) of the non display parts of the screen image (200) located on the screen image next to an edge (111) of the display unit which is opposite to the determined direction of the moved display unit (110) becomes part of the displayed parts of the screen image and that a second section (222) of the displayed parts of the screen image located on the screen image next to an edge (112) of the display unit which is located in the determined direction of the moved display unit becomes part of the non displayed parts of the screen image.

6. The display system according to claim 5, wherein the screen image (200) is a geographical map, the displayed parts of the screen image representing a specified region on the geographical map, the non displayed parts representing a non displayed region of the geographical map, the first section becoming a displayed part of the geographical map, the second section becoming a non displayed part of the geographical map.

7. The display system according to any of claims 1 to 4, wherein the screen image (200) has substantially the same size as the display unit, wherein the display driver is configured such that, when the screen image is moved in a direction opposite to the determined direction of the moved display unit, the display driver changes the displayed screen image in such a way that a first section of the screen image next to an edge of the screen image which is opposite to the determined direction of the moved display unit is displayed with a uniform colour hue, wherein a second section of the screen image located on the screen image next to an edge of the screen image which is located in the determined direction of the moved display unit becomes a non displayed part of the screen image.

8. The display system according to any of the preceding claims, wherein the acceleration sensor (130) is configured to determine a movement of the display unit in a direction perpendicular to a plane defined by the screen image, wherein the display driver (120) changes a scale of the displayed screen image in dependence on the detected movement perpendicular to the plane of the screen image.

9. The display system according to any of the preceding claims, further comprising an enabling/disabling element (125) configured to enable and disable the compensation movement of the screen image.

10. The display system according to any of the preceding claims, wherein the acceleration sensor is configured to detect an angular momentum of the display unit, wherein, if a rotational movement of the display unit is detected, the display driver initiates a rotational compensation movement of the screen image.

11. A display system (100) comprising:
- a display unit (110) displaying a screen image
- an acceleration sensor determining a direction information of a movement of the display unit
- a display driver controlling the displaying of the screen image on the display unit,
- wherein the acceleration sensor is configured to determine a movement of the display unit in a direction perpendicular to a plane defined by the screen image, wherein the display driver, receiving the direction information of a movement perpendicular to the screen image, changes a scale of the displayed screen image in dependence on the movement of the display unit.

12. A navigation system provided in a vehicle comprising a display system as mentioned in any of the preceding claims.

13. A portable mobile device comprising a display system as mentioned in claims 1 to 11.

14. A method for displaying a screen image (200) on a display unit, the method comprising the steps of:
- determining a direction information of a movement of the display unit (110),
- controlling the displaying of the screen image (200) on the display unit in such a way that the movement of the display unit (110) is at least partly compensated by a compensation movement in which the screen image displayed in the display unit (110) is moved in a direction opposite to the determined direction of the moved display unit.

15. The method according to claim 14, wherein the movement of the display unit (110) is compensated such that that the displayed screen image (200) substantially remains in a fixed position relative to a fixed reference frame.

16. The method according to claim 14 or 15, wherein it is detected whether the display unit is moved back a direction opposite to the determined direction within a predetermined period of time, wherein if it is detected that the display unit is not moved back within said predetermined period of time, the displaying of the screen image is controlled in such a way that the compensation movement of the screen image is reversed so that the screen image as displayed before the compensation movement is displayed.

17. The method according to claim 14 or 15, wherein the screen image (200) is a geographical map, that is larger than the display unit (110) the screen image (220) comprising displayed parts of screen image and non displayed parts of the screen image, the non displayed parts being outside the region of the screen image visible on the display unit" wherein the screen image visible on the display unit is controlled in such a way that in dependence on a determined direction of the movement of the display unit non displayed parts of the geographical map positioned in the direction of the movement display unit become displayed parts of the screen image, allowing to display the parts of the geographical map on the screen image in dependence on the movement of the display unit.
